# EUROPÄISCHE PATENTSCHRIFT

(11) **EP 3 797 217 B1**
(45) Veröffentlichungstag und Bekanntmachung des Hinweises auf die Patenterteilung: **13.09.2023**
(21) Anmeldenummer: 19731129.3
(22) Anmeldetag: 21.05.2019
(51) Int. Cl.: F01K 23/10

(54) **FLUGZEUGANTRIEBSSYSTEM MIT ABGASBEHANDLUNGSVORRICHTUNG UND VERFAHREN ZUM BEHANDELN EINES ABGASSTROMES**
AIRCRAFT PROPULSION SYSTEM WITH EXHASUT-GAS TREATMENT DEVICE AND METHOD FOR TREATING AN EXHAUST-GAS STREAM
SYSTÈME D'ENTRAÎNEMENT D'AÉRONEF AVEC DISPOSITIF DE TRAITMENET DE GAZ D'ÉCHAPPEMENT, ET PROCÉDÉ DE TRAITEMENT D'UN FLUX DE GAZ D'ÉCHAPPEMENT

(30) Priorität: 22.05.2018 DE 102018208026
(43) Veröffentlichungstag der Anmeldung: 31.03.2021
(73) Patentinhaber: MTU Aero Engines AG, 80995 München (DE)
(72) Erfinder: KLINGELS, Hermann, 85221 Dachau (DE); SCHMITZ, Oliver, 80798 München (DE)
(86) Internationale Anmeldenummer: PCT/DE2019/000142
(87) Internationale Veröffentlichungsnummer: WO 2019/223823

(56) Entgegenhaltungen:
- EP-A1- 2 295 764
- WO-A1-2010/084525
- WO-A2-2011/006882
- DE-A1- 4 227 146
- US-A- 5 247 791
- US-A- 5 896 740

## Beschreibung

Die vorliegende Erfindung betrifft eine Flugzeugantriebssystem mit einer solchen Abgasbehandlungsvorrichtung und ein Verfahren zum Behandeln eines Abgasstromes. Die Abgasbehandlungsvorrichtung nutzt eine Abgasenergie und reduziert Kondensstreifen, die durch eine Kondensation nach einer Expansion entstehen. Flugzeuge (oder allgemein Fluggeräte) werden meistens durch Wärmekraftmaschinen in Kombination mit geeigneten Vortriebserzeugern (Propulsoren) angetrieben. Als Vortriebserzeuger werden Propeller und Gebläse (so genannte "*Fans*") verwendet, zudem trägt auch der Abgasstrahl aus der Wärmekraftmaschine zum Vortrieb bei. Die am meisten verwendeten Wärmekraftmaschinen sind Kolbenmotoren und Gasturbinen, wobei die Kolbenmaschinen heute nur bei relativ kleinen Fluggeräten eingesetzt werden.

Als Energieträger werden derzeit fast ausschließlich fossile Kraftstoffe verwendet. Es gab ferner Versuche mit flüssigem Wasserstoff oder flüssigem Erdgas. Bei der Verbrennung dieser Kraftstoffe entstehen unerwünschte Umweltbelastungen, die zur Klimaänderung beitragen. Bei der Verbrennung fossiler Kraftstoffe entstehen hauptsächlich Kohlenstoffdioxid (CO₂) und Wasser (H₂0), aber auch Stickoxide (N0ₓ), Schwefeloxide (S0ₓ), unverbrannte Kohlenwasserstoffe (CₓH_{y}), Kohlenstoffmonoxid (CO), etc. sind im Abgas zu finden. Bei Verwendung von Wasserstoff werden hauptsächlich Wasser und wegen der hohen Prozesstemperaturen auch Stickoxide (NOₓ) produziert.

Das im Abgas vorhandene Wasser erzeugt unter bestimmten Bedingungen Kondensstreifen. Diese werden gebildet, wenn sich das warme, feuchte Abgas mit kälterer Umgebungsluft mischt. Es entstehen an so genannten Kondensationskeimen (zum Beispiel Staub/Rußpartikel oder elektrisch geladene Moleküle) mikroskopisch kleine Wassertropfen oder -wenn die Umgebungstemperatur niedrig genug ist- winzig kleine Eiskristalle.

Die Auswirkung der Kondensstreifen und der daraus entstehenden Zirruswolken auf die globale Klimaveränderung wird unter Fachleuten kontrovers diskutiert, wobei vielfach die Meinung vertreten wird, dass die Auswirkung der Kondensstreifen von ähnlicher -wenn nicht sogar größerer- Bedeutung wie der CO₂ Ausstoß ist. Kondensstreifen haben damit einen wesentlichen Anteil auf die Klimaeinwirkung des gesamten Flugverkehrs.

US 7 971 438 B2 offenbart ein Flugzeugantriebssystem, bei dem die Bildung von Kondensstreifen durch Auskondensieren des im Abgas vorhandenen Wasserdampfs erfolgt, bevor dieser in die Atmosphäre entlassen wird. Das vorgeschlagene System besteht aus einer Gasturbine mit einem System von Wärmetauschern (Rekuperatoren). Stromabwärts von der letzten Turbinenstufe ist ein erster Wärmetauscher angeordnet. Dieser überträgt Abgasenergie auf die vom Verdichter gelieferte Luft, bevor diese in die Brennkammer eintritt, wodurch sich das Abgas abkühlt.

Danach durchströmt es einen weiteren Wärmetauscher (ebenfalls ein Rekuperator, der als Kondensator dient), wo es weiter abgekühlt wird, indem solange Energie auf ein kühleres Fluid, zum Beispiel Luft aus einem Nebenstrom ("*Bypass*"), übertragen wird, bis der im Abgas befindliche Wasserdampf -zumindest teilweise- auskondensiert. Das entstehende Wasser soll in die Brennkammer eingespritzt werden oder einfach in flüssiger Form über Bord gelassen werden.

Das abgekühlte (trockene) Abgas wird dann durch einen dritten Wärmetauscher geleitet. Dieser dient zum Zwischenkühlen während der Verdichtung ("*Intercooler*"). Hierbei wird es wieder aufgeheizt und dann mit der Nebenstromluft -die zuvor durch den Kondensator geströmt ist- vermischt und in einer gemeinsamen Düse entspannt.

Die Rekuperatoren sind reine Gas/Gas-Wärmetauscher. Da diese bei niedrigem Druck und auch mit geringen Temperaturdifferenzen arbeiten, sind sie sehr voluminös und damit schwer und erzeugen zudem große Druckverluste. Besonders der Kondensator arbeitet auf beiden Strömungsseiten bei niedrigem Druck und bei geringer Temperaturdifferenz, und er soll zudem im Nebenstrom -wo die Strömungsgeschwindigkeit sehr hoch ist- angeordnet werden.

Ein solches Konzept kann zwar theoretisch die Kondensstreifen reduzieren und den thermischen Wirkungsgrad im Vergleich zu einem konventionellen Triebwerk steigern. Die durch die Wärmetauscher (speziell durch den Kondensator) verursachten aerodynamischen Verluste, das zusätzliche Gewicht und der zu erwartende größere Widerstand wegen des voluminösen Antriebssystems dürften allerdings das theoretische Verbesserungspotential übersteigen.

US 3 978 661 B1 offenbart eine Wärmekraftmaschine, bei der ein Gasturbinenprozess und ein Dampfprozess parallel zum Einsatz kommen. Stromabwärts von der letzten Turbine ist ein Verdampfer angeordnet, welcher vom Abgas durchströmt wird. Der erzeugte Dampf wird in die Brennkammer der Wärmekraftmaschine eingebracht, wodurch eine hohe spezifische Enthalpie am Brennkammeraustritt vorliegt. Anschließend wird das Abgas durch einen Kondensator geleitet, wo es soweit abgekühlt wird, bis das darin enthaltene Wasser -zumindest teilweise- auskondensiert.

GB 2 531 632 A offenbart eine mechanische Vorrichtung mit einem Drallgefäß, das extern an einer Auslassöffnung eines Flugzeuggasturbinentriebwerks befestigt werden kann, um die Bildung von Kondensstreifen zu unterdrücken. Die Abgase werden in die Vorrichtung eingeführt und gelangen mit Turbinenschaufeln in Kontakt, wodurch sich das Gefäß und folglich die Gase drehen, um Feuchtigkeit aus den Gasen zentrifugal zu trennen. Eine Restwärme in der entwässerten Strömung wird teilweise durch den Bedarf an thermischer Energie zurückgewonnen, bevor das Wasser entsorgt wird.

WO 2011 006 882 A und US 5 896 740 A offenbaren Abgasbehandlungsvorrichtungen für Stationärgasturbinen.

Eine Aufgabe der Ausführungsformen der vorliegenden Erfindung ist es, ein Flugzeugantriebssystem und ein Verfahren zum Behandeln eines Abgasstromes bereitzustellen, durch die jeweils ein höherer thermischer Wirkungsgrad durch effiziente Nutzung der Abgasenergie erzielt und die Bildung von Kondensstreifen minimiert werden können.

Diese Aufgabe wird jeweils durch ein Flugzeugantriebssystem mit den Merkmalen der Ansprüche 1 und 2 und ein Verfahren zum Behandeln eines Abgasstromes mit den Merkmalen der Ansprüche 9 und 10 gelöst. Vorteilhafte Ausführungsformen der Erfindung sind Gegenstand der Unteransprüche.

Nach einem ersten Aspekt der vorliegenden Erfindung hat ein Flugzeugantriebssystem eine Abgasbehandlungsvorrichtung zur Behandlung eines Abgasstromes aus einer Strömungsmaschine. Die Abgasbehandlungsvorrichtung hat einen Kondensator, der zumindest einen Teil eines in dem Abgasstrom aus der Strömungsmaschine enthaltenen Wassers kondensiert und dadurch eine erste Energie abgibt; einen Verdampfer, der zumindest einen Teil des in dem Kondensator kondensierten Wassers verdampft und dadurch eine zweite Energie aufnimmt, die dem Abgasstrom aus der Strömungsmaschine entnommen wird; eine Turbine, die durch Dampf, der von dem Verdampfer abgegeben wird, angetrieben wird und den Dampf entspannt; ein Gebläse, das dem Kondensator Umgebungsluft zuführt, damit diese die erste Energie aufnimmt; und zumindest eine Auslassvorrichtung, von der die von dem Kondensator abgegebene Umgebungsluft und/oder ein entfeuchteter Abgasstrom von dem Kondensator ausgelassen wird. Ein entsprechendes Verfahren zum Behandeln eines Abgasstromes aus einer Strömungsmaschine hat Schritte zum Kondensieren zumindest eines Teils eines in dem Abgasstrom aus der Strömungsmaschine enthaltenen Wassers in einem Kondensator, wobei eine erste Energie abgegeben wird; zum Verdampfen zumindest eines Teil des in dem Kondensator kondensierten Wassers in einem Verdampfer, wobei eine zweite Energie aufgenommen wird, die dem Abgasstrom aus der Strömungsmaschine entnommen wird; zum Antreiben einer Turbine durch Dampf, der von dem Verdampfer abgegeben wird, und Entspannen des Dampfs; zum Antreiben eines Gebläses, um dem Kondensator Umgebungsluft zuzuführen, damit diese die erste Energie aufnimmt; und zum Auslassen der von dem Kondensator abgegebenen Umgebungsluft und/oder eines entfeuchteten Abgasstroms von dem Kondensator aus zumindest einer Auslassvorrichtung.

Im Vergleich zu dem System, wie es in US 7 971 438 B2 beschrieben ist, kommen vorliegend nur zwei Wärmetauscher in Gestalt des Kondensators und des Verdampfers zum Einsatz, die wegen der hohen spezifischen Leistung ebenfalls relativ klein und kompakt gebaut werden können.

Nach einem alternativen, zweiten Aspekt der vorliegenden Erfindung hat ein Flugzeugantriebssystem eine Abgasbehandlungsvorrichtung zur Behandlung eines Abgasstromes aus einer Strömungsmaschine und die Abgasbehandlungsvorrichtung hat ein Gebläse, das Umgebungsluft abgibt; eine Mischvorrichtung, die die von dem Gebläse abgegebene Umgebungsluft mit zumindest einem Teil des Abgasstromes aus der Strömungsmaschine mischt, damit zumindest ein Teil eines in dem Abgasstrom enthaltenen Wassers kondensiert; einen Verdampfer, der zumindest einen Teil des in der Mischvorrichtung kondensierten Wassers verdampft und dadurch Energie aufnimmt, die dem Abgasstrom aus der Strömungsmaschine entnommen wird; eine Turbine, die durch Dampf, der von dem Verdampfer abgegeben wird, angetrieben wird und den Dampf entspannt; und eine Auslassvorrichtung, von der zumindest ein Teil des mit der Umgebungsluft gemischten und entfeuchteten Abgasstroms von der Mischvorrichtung ausgelassen wird. Ein entsprechendes Verfahren zum Behandeln eines Abgasstromes aus einer Strömungsmaschine hat Schritte zum Abgeben von Umgebungsluft durch ein Gebläse; zum Mischen der von dem Gebläse abgegebenen Umgebungsluft mit zumindest einem Teil des Abgasstromes aus der Strömungsmaschine durch eine Mischvorrichtung, damit zumindest ein Teil eines in dem Abgasstrom enthaltenen Wassers kondensiert; zum Verdampfen zumindest eines Teils des in der Mischvorrichtung kondensierten Wassers durch einen Verdampfer, der dadurch Energie aufnimmt, die dem Abgasstrom aus der Strömungsmaschine entnommen wird; zum Antreiben einer Turbine durch Dampf, der von dem Verdampfer abgegeben wird, zum Entspannen des Dampfs; und zum Auslassen zumindest eines Teils des mit der Umgebungsluft gemischten und entfeuchteten Abgasstroms von der Mischvorrichtung aus einer Auslassvorrichtung.

Vorzugsweise ist bei dem zweiten Aspekt der Erfindung eine Kühlvorrichtung im Abgasstrom stromaufwärts von der Mischvorrichtung angeordnet, die zumindest einen Teil des Abgasstroms aus der Strömungsmaschine kühlt und dadurch Energie abgibt.

In vorteilhafter Weise kann bei dem zweiten Aspekt die Baugröße weiter verringert werden, da auf einen separaten Kondensator verzichtet wird.

Vorzugsweise ist bei beiden Aspekten der Erfindung im Abgasstrom stromabwärts vom dem Kondensator oder stromabwärts von der Mischvorrichtung eine Abscheidevorrichtung angeordnet, die das von dem Kondensator oder von der Mischvorrichtung abgegebene, kondensierte Wasser abscheidet und dem Verdampfer zuführt. Weiter bevorzugt weist die Abscheidevorrichtung eine Sprühelektrode, eine Niederschlagelektrode und/oder einen Drallerzeuger auf, wodurch die Wasserabscheidung optimiert werden kann. In vorteilhafter Weise kann die gesamte Abgasenergie bei der Expansion in den Düsen noch vorliegen und die Abscheidevorrichtung kann einen kleinen Volumenstrom haben, die damit relativ geringe Abmessungen aufweist und die Wasserabscheidung effektiv durchführt.

Bei beiden Aspekten wird das im Abgas der Wärmekraftmaschine vorhandene Wasser -zumindest zu einem großen Teil- kondensiert. Das dadurch ausfallende Wasser wird zurückgewonnen und für einen halboffenen Kreisprozess genutzt.

Das Gebläse kann durch die Turbine oder durch eine Hilfsturbine angetrieben werden, welche wiederum durch einen Abgasstrom von dem Verdampfer angetrieben wird.

Vorzugsweise wird bei beiden Aspekten der Erfindung der in der Turbine entspannte Dampf in eine Brennkammer der Strömungsmaschine eingebracht und/oder zur Kühlung von Bauteilen in einem Heißbereich der Strömungsmaschine verwendet, was einen Beitrag zur Erhöhung des thermischen Wirkungsgrads hat.

Vorzugsweise sind bei beiden Aspekten der Erfindung im Abgasstrom stromabwärts von dem Kondensator oder stromabwärts von der Mischvorrichtung und stromaufwärts von dem Verdampfer eine Kondensatpumpe, eine Wasseraufbereitungsvorrichtung, ein Wasserspeicher und/oder eine Speisewasserpumpe angeordnet, wodurch die Zufuhr des abgeschiedenen Wassers zu dem Verdampfer verbessert werden kann. Weiter bevorzugt sind die Kondensatpumpe, die Wasseraufbereitungsvorrichtung, der Wasserspeicher und/oder die Speisewasserpumpe stromabwärts von einer Abscheidevorrichtung angeordnet.

Das Gebläse kann durch die Turbine oder durch eine Hilfsturbine angetrieben werden, welche wiederum durch den Abgasstrom von dem Verdampfer angetrieben wird.

In einer Ausführung können ein oder mehrere, insbesondere alle, Schritte des Verfahrens vollständig oder teilweise automatisiert durchgeführt werden, insbesondere durch eine Steuerung bzw. ihr(e) Mittel.

Weitere vorteilhafte Weiterbildungen der vorliegenden Erfindung ergeben sich aus den Unteransprüchen und der nachfolgenden Beschreibung bevorzugter Ausführungen. Hierzu zeigen, teilweise schematisiert:
- Fig. 1: ein Flugzeugantriebssystem nach einer ersten Ausführungsform der vorliegenden Erfindung;
- Fig. 2: ein Flugzeugantriebssystem nach einer zweiten Ausführungsform der vorliegenden Erfindung;
- Fig. 3: ein Flugzeugantriebssystem nach einer dritten Ausführungsform der vorliegenden Erfindung; und
- Fig. 4: ein Flugzeugantriebssystem nach einer vierten Ausführungsform der vorliegenden Erfindung.

Im Folgenden wird die Funktionsweise am Beispiel eines Turbofan-Triebwerks mit nachgeschaltetem Verdampfer und Wasserrückgewinneinrichtung beschrieben.

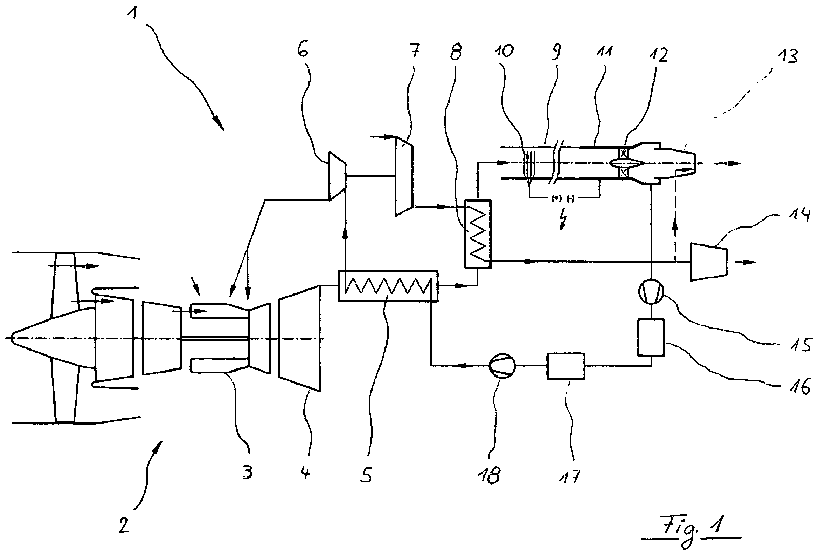

Fig.1 zeigt schematisch eine Ausführungsform eines erfindungsgemäßen Flugzeugantriebssystems 1. Das Flugzeugantriebssystem 1 hat eine Strömungsmaschine 2 in Gestalt einer Wärmekraftmaschine und eine nachfolgend beschriebene Abgasbehandlungsvorrichtung. Die Strömungsmaschine 2 hat eine Brennkammer 3 und eine Niederdruckturbine 4.

Die Abgase der Wärmekraftmaschine 2 werden nicht, wie normalerweise üblich, direkt in die Atmosphäre entlassen, wo sie sich mit der Umgebungsluft vermischen und dann Kondensstreifen bilden, sondern werden durch einen stromabwärts von der Niederdruckturbine 4 angeordneten Verdampfer 5 geleitet. Dort wird dem Abgas Energie für die Erzeugung von Wasserdampf entzogen, wodurch die Abgastemperatur sinkt.

Das dem Verdampfer 5 zugeführte Wasser wurde vorab mittels einer Speisewasserpumpe 18 auf einen Druck gebracht, der deutlich höher als der Druck in der Brennkammer 3 der Strömungsmaschine 2 ist.

Der in dem Verdampfer 5 erzeugte Hochdruckdampf wird über mindestens eine Turbine 6 in Gestalt einer Dampfturbine auf ein Druckniveau entspannt, das knapp über dem der Brennkammer 3 liegt.

Der Dampf kann dann direkt in die Brennkammer 3 eingebracht oder/und zur Kühlung von Bauteilen im Heißbereich verwendet werden. Die spezifische Enthalpie am Austritt der Brennkammer 3 ist wegen der hohen spezifischen Wärmekapazität des Wassers im Vergleich zu einem Triebwerk ohne Dampfanteil als Arbeitsmedium größer.

Der in die Brennkammer 3 eingebrachte Dampf erhöht den Massenstrom und damit die Leistung des Flugzeugantriebssystems 1. Für den zusätzlichen Massestrom muss keine Volumenänderungsarbeit bereitgestellt werden. Der Druckaufbau kann in der Speisewasserpumpe 18 im flüssigen Zustand erfolgen. Dadurch steigt die spezifische Nutzleistung stark an und die geforderte Leistung wird mit einem deutlich geringeren Massedurchsatz -im Vergleich zu einem konventionellen Triebwerk- erzielt.

Die Turbine 6 wiederum treibt ein Gebläse 7 an. Das Gebläse 7 fördert kalte Umgebungsluft durch einen Kondensator 8, der bei der ersten Ausführungsform im Abgasstrom stromabwärts von dem Verdampfer 5 angeordnet ist. Dabei nimmt die geförderte Umgebungsluft Energie vom Abgasstrom auf. Anschließend wird die aufgeheizte Umgebungsluft in einer Düse 14 entspannt oder alternativ vor der Kerntriebwerksdüse 13 dem Abgas zugemischt. Das Gebläse 7 kann alternativ auch indirekt (zum Beispiel durch einen Elektromotor) angetrieben werden. In diesem Fall kann die Dampfturbine 6 einen Generator antreiben oder ihre Leistung in die Strömungsmaschine 2 einspeisen.

Um das im Abgasstrom befindliche Wasser in flüssiger Form zu erhalten, muss es unter seinem so genannten Taupunkt abgekühlt werden. Das geschieht in dem Kondensator 8. Am Taupunkt ist die relative Feuchte auf 100% angestiegen, so dass eine Sättigung erreicht ist. Bei einer weiteren Abkühlung nimmt der Sättigungsdampfdruck sehr viel schneller ab als der Wasserpartialdruck, dadurch kommt es zur Übersättigung, und an Kondensationskeimen bilden sich kleine Wassertropfen. Nach Unterschreiten der Taupunkttemperatur liegt das enthaltene Wasser -zumindest teilweise- in flüssiger Form vor.

Danach wird das Gas/Wasser-Gemisch in eine Abscheidevorrichtung 9 in Gestalt eines Abscheidekanals geleitet und anschließend in der Kerntriebwerksdüse 13 entspannt.

Im Abscheidekanal 9 werden die Wassermoleküle zum Beispiel mittels einer Sprühelektrode 10 nach dem Korona-Aufladeverfahren (Stoßionisation) elektrostatisch aufgeladen. An die Oberfläche des Abscheidekanals 9 wird der komplementäre Pol an einer Niederschlagelektrode 11 angelegt. Die elektrostatischen Kräfte bewirken eine Bewegung der Wassertropfen zu einer Wand des Abscheidekanals 9, wo weiter stromabwärts das Wasser gesammelt wird. Hier können zusätzlich zur Unterstützung der Abscheidewirkung die Trägheit und der Dichteunterschied zwischen den Wassertropfen und dem Gasgemisch ausgenutzt werden (zum Beispiel durch einen Zyklon, einen Drallerzeuger, eine schroffe Umlenkung, etc.). In Fig. 1 ist beispielhaft ein Drallerzeuger 12 dargestellt. Grundsätzlich sind andere aus der Verfahrenstechnik für die Wasserabscheidung bekannten Trennverfahren anwendbar.

Das abgeschiedene Wasser wird von einer Kondensatpumpe 15 abgesaugt, dann über eine Wasseraufbereitungsvorrichtung 16 in einen Wasserspeicher 17 geleitet. Der verbleibende, gereinigte Abgasstrom ohne das abgeschiedene Wasser kann aus der Kerntriebwerksdüse 13 ausgelassen werden.

Das im Abgasstrom aus der Wärmekraftmaschine 2 enthaltene Wasser durchläuft bei der ersten Ausführungsform in dieser Reihenfolge den Verdampfer 5, den Kondensator 8, die Abscheidevorrichtung 9, die Kondensatpumpe 15, die Wasseraufbereitungsvorrichtung 16, den Wasserspeicher 17, die Speisewasserpumpe 18, den Verdampfer 5, die Turbine 6 und ggf. die Brennkammer 3 oder die Bauteile im Heißbereich. Das gereinigte Abgas aus dem Abgasstrom aus der Wärmekraftmaschine 2 verlässt bereits nach der Abscheidevorrichtung 9 den Kreislauf, und es wird zum Beispiel aus der Kerntriebwerksdüse 13 ausgelassen.

Die Strömung der Umgebungsluft bei der ersten Ausführungsform durchläuft in dieser Reihenfolge das Gebläse 7, den Kondensator 8 und die Düse 14 bzw. es wird zumindest teilweise mit dem gereinigten Abgas vermischt und aus der Kerntriebwerksdüse 13 ausgelassen.

Ein Vorteil dieses Systems liegt darin, dass die gesamte Abgasenergie bei der Expansion in den Düsen noch vorliegt und die Abscheidevorrichtung 9 einen kleinen Volumenstrom hat, damit relativ geringe Abmessungen aufweist und die Wasserabscheidung effektiv durchführbar ist. Im Vergleich zu dem System, wie es in US 7 971 438 B2 beschrieben ist, kommen vorliegend nur zwei Wärmetauscher 5, 8 zum Einsatz, die zudem wegen der hohen spezifischen Leistung relativ klein und kompakt gebaut werden können.

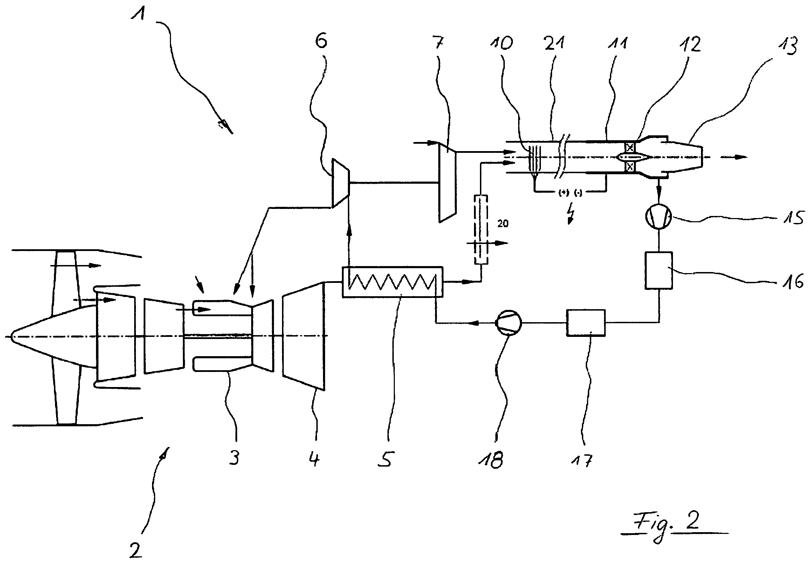

Fig.2 zeigt schematisch eine alternative Ausführungsform der vorliegenden Erfindung. Die Bezugszeichen sind weitestgehend mit denen der Fig. 1 identisch.

In der zweiten Ausführungsform ist eine Kühlvorrichtung 20 in Gestalt eines Verbindungskanals im Abgasstrom stromabwärts von dem Verdampfer 5 angeordnet.

Die Kühlvorrichtung 20 kühlt zumindest einen Teil des Abgasstroms aus der Strömungsmaschine 2 und gibt dadurch Energie ab.

Der Hauptunterschied zu der ersten Ausführungsform liegt darin, dass in der zweiten Ausführungsform kein Kondensator 8 zum Einsatz kommt und die vom Gebläse 7 geförderte kalte Umgebungsluft mit dem bereits abgekühlten Abgas in einer Mischvorrichtung 21 in Gestalt eines Mischkanals gemischt wird. Die Mischvorrichtung 21 ist in der zweiten Ausführungsform im Abgasstrom stromabwärts von dem Verdampfer 5 angeordnet.

Das im Abgasstrom aus der Wärmekraftmaschine 2 enthaltene Wasser durchläuft bei der zweiten Ausführungsform in dieser Reihenfolge den Verdampfer 5, die Kühlvorrichtung 20, die Mischvorrichtung 21, die Kondensatpumpe 15, die Wasseraufbereitungsvorrichtung 16, den Wasserspeicher 17, die Speisewasserpumpe 18, den Verdampfer 5, die Turbine 6 und ggf. die Brennkammer 3 oder die Bauteile im Heißbereich. Das gereinigte Abgas verlässt bereits nach der Mischvorrichtung 21 den Kreislauf, und es wird zum Beispiel aus der Kerntriebwerksdüse 13 ausgelassen.

Die Strömung der Umgebungsluft bei der zweiten Ausführungsform durchläuft in dieser Reihenfolge das Gebläse 7, die Mischvorrichtung 21, und es wird dann zumindest teilweise mit dem gereinigten Abgas aus der Kerntriebwerksdüse 13 ausgelassen.

Vorzugsweise sind das Gebläse 7 und die Mischvorrichtung 21 entfernt von der Wärmekraftmaschine 2 angeordnet. Die Kühlvorrichtung 20 zwischen dem Verdampfer 5 und der Mischvorrichtung 21 kann vorzugsweise ohne Isolierung entlang einer Oberfläche eines Flugzeuges (zum Beispiel am Flügel, am Rumpf, etc.) angeordnet sein, wodurch das Abgas vor der Mischung in der Mischvorrichtung 21 schon Wärme an die Umgebung abgibt. Das Abgas kühlt dabei ab und wird anschließend in die Mischvorrichtung 21 geleitet, wo kalte Umgebungsluft zugemischt wird, bis das enthaltene Wasser kondensiert. Die Wasserabscheidung und Aufbereitung erfolgt wie bei der ersten Ausführungsform.

Durch die Temperaturabsenkung, die Energieabgabe an die Umgebung und die Mischung mit kalter Umgebungsluft kann die Kondensation bei der zweiten Ausführungsform ohne Wärmetauscher (Kondensator) erfolgen. Die von der Kühlvorrichtung 20 an die Umgebung abgegebene Wärme stellt jedoch einen Verlust dar, weil die Enthalpie des Abgases vor der Entspannung in der Kerntriebwerksdüse 13 reduziert wird.

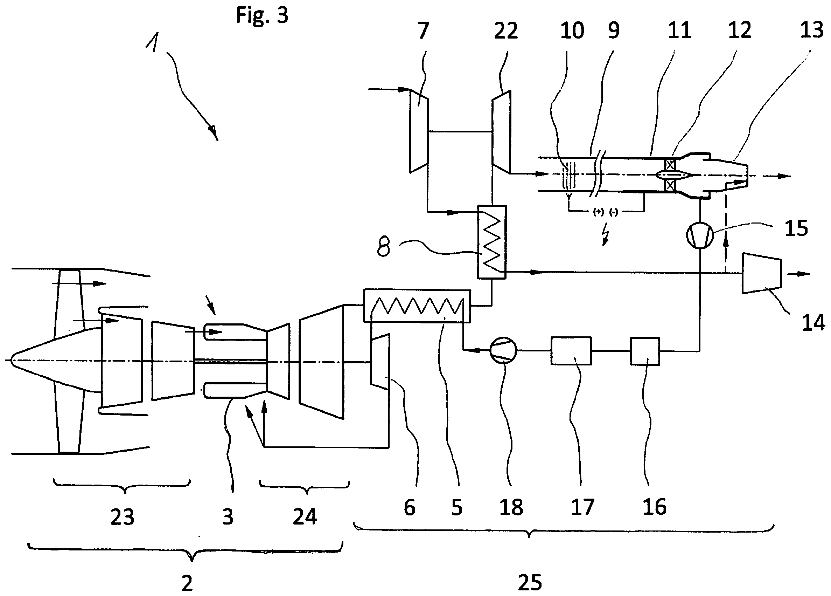

Fig. 3 zeigt ein Flugzeugantriebssystem nach einer dritten Ausführungsform der vorliegenden Erfindung. Jene Komponenten, die gleich oder ähnlich zu den Komponenten der ersten Ausführungsform sind, haben dieselben Bezugszeichen.

Zur Nutzung der Abgasenergie wird ebenfalls Dampf erzeugt. Anders als bei einem konventionellen Triebwerk, wo die Abgase der Wärmekraftmaschine direkt in die Atmosphäre entlassen werden und sich dort mit der Umgebungsluft vermischen und dann Kondensstreifen bilden, ist gemäß der dritten Ausführungsform ein Dampf/ Wasserrückgewinn-System 25 stromabwärts der Wärmekraftmaschine 2 angeordnet.

Umgebungsluft wird unter Druckerhöhung von einem Verdichterbereich 23 der Wärmekraftmaschine 2 in die Brennkammer 3 gefördert. Dort wird der erzeugte Dampf zugemischt. Wegen der hohen spezifischen Wärmekapazität des Wassers wird durch die Verbrennung von Kraftstoff ein Arbeitsgas mit sehr hoher spezifischer Enthalpie erzeugt.

Ein Teil der Expansion findet in einem Turbinenbereich 24 der Wärmekraftmaschine 2 statt, wobei die Temperatur des Abgases am Austritt noch relativ hoch ist.

Um das im Abgas befindliche Wasser in flüssiger Form zu erhalten, muss es unter den so genannten Taupunkt abgekühlt werden. Am Taupunkt ist die relative Feuchte auf 100% angewachsen und damit eine Sättigung erreicht. Bei weiterer Abkühlung nimmt der Sättigungsdampfdruck sehr viel schneller ab als der Wasserpartialdruck, wodurch eine Übersättigung eintritt. An Kondensationskeimen bilden sich kleine Wassertropfen. Nach Unterschreiten der Taupunkttemperatur liegt das enthaltene Wasser -zumindest teilweise- in flüssiger Form vor.

Stromabwärts dem Turbinenbereich 24 der Wärmekraftmaschine 2 ist ein Verdampfer 5 angeordnet. Dort wird dem Abgas Energie für die Erzeugung von Wasserdampf entzogen, wodurch seine Temperatur weiter sinkt. Anschließend wird das Abgas durch den (weiteren) Wärmetauscher 8 und von dort in eine Hilfsturbine 22 geleitet. Nach der Expansion in der Hilfsturbine 22 ist die Abgastemperatur niedriger als die Taupunkttemperatur, und das enthaltene Wasser liegt -zumindest teilweise- in flüssiger Form vor.

Die Hilfsturbine 22 treibt das Gebläse 7 an. Das Gebläse 7 fördert kalte Umgebungsluft durch den Wärmetauscher 8. Dabei wird Abgasenergie auf die vom Gebläse 7 geförderte Luft übertragen, diese heizt sich dabei auf und wird dann in einer Düse 14 entspannt oder alternativ, vor der Kerntriebwerksdüse 13, dem Abgas zugemischt. Das Gebläse 7 kann alternativ auch indirekt (zum Beispiel durch einen Elektromotor) angetrieben werden. In diesem Fall würde die Hilfsturbine 22 einen Generator antreiben oder ihre Leistung in die Wärmekraftmaschine 2 einspeisen.

Stromabwärts der Hilfsturbine 22 wird das Abgas in die Abscheidevorrichtung (Abscheidekanal) 9 geleitet und anschließend in der Kerntriebwerksdüse 13 entspannt. In der Abscheidevorrichtung 9 werden die Wassermoleküle zum Beispiel mittels der Sprühelektrode 10 nach dem Korona-Aufladeverfahren (Stoßionisation) elektrostatisch aufgeladen. An die Oberfläche bzw. an einer Kanalwand der Abscheidevorrichtung 9 wird der komplementäre Pol an die Niederschlagelektrode 11 angelegt. Die elektrostatischen Kräfte bewirken eine Bewegung der Wassertropfen zur Kanalwand, wo weiter stromabwärts das Wasser gesammelt wird. Hier können zusätzlich zur Unterstützung der Abscheidewirkung die Trägheit und der Dichteunterschied zwischen den Wassertropfen und dem Gasgemisch ausgenutzt werden (zum Beispiel durch einen Zyklon, einen Drallerzeuger, eine schroffe Umlenkung). In der Fig. 3 ist beispielhaft ein Drallerzeuger 12 dargestellt. Grundsätzlich sind alle aus der Verfahrenstechnik für die Wasserabscheidung bekannten Trennverfahren anwendbar.

Das abgeschiedene Wasser wird von der Kondensatpumpe 15 abgesaugt, dann über die Wasseraufbereitungsvorrichtung 16 in den Wasserspeicher 17 geleitet.

Der Wasserdampf wird mittels der Speisewasserpumpe 18 auf einen Druck gebracht, der mindesten etwas höher ist als der Druck in der Brennkammer 3 der Wärmekraftmaschine 2. Der erzeugte Dampf kann direkt in die Brennkammer 3 der Wärmekraftmaschine 2 eingebracht oder/und für die Kühlung von Bauteilen im Heißbereich verwendet werden. Vorteilhaft kann der Dampf auf einen deutlich höheren Druck gebracht werden. In diesem Fall wird der erzeugte Hochdruckdampf mittels minde s-tens der Turbine (Dampfturbine 6) auf ein Druckniveau entspannt, das knapp über jenem der Brennkammer 3 liegt. Die Leistung der Turbine 6 kann, wie dargestellt, direkt auf eine Welle der Wärmekraftmaschine 2 eingespeist werden oder zum Antrieb von Nebenaggregaten genutzt werden. Damit kann der Wirkungsgrad der Wärmekraftmaschine 2 weiter erhöht werden.

Das im Abgasstrom aus der Wärmekraftmaschine 2 enthaltene Wasser durchläuft bei der dritten Ausführungsform in dieser Reihenfolge den Verdampfer 5, den Kondensator 8, die Hilfsturbine 22, die Abscheidevorrichtung 9, die Kondensatpumpe 15, die Wasseraufbereitungsvorrichtung 16, den Wasserspeicher 17, die Speisewasserpumpe 18, den Verdampfer 5, die Turbine 6 und ggf. die Brennkammer 3 oder die Bauteile im Heißbereich. Das gereinigte Abgas aus dem Abgasstrom aus der Wärmekraftmaschine 2 verlässt bereits nach der Abscheidevorrichtung 9 den Kreislauf, und es wird zum Beispiel aus der Kerntriebwerksdüse 13 ausgelassen.

Die Strömung der Umgebungsluft bei der dritten Ausführungsform durchläuft in dieser Reihenfolge das Gebläse 7, den Kondensator 8 und die Düse 14 bzw. es wird zumindest teilweise mit dem gereinigten Abgas vermischt und aus der Kerntriebwerksdüse 13 ausgelassen.

Insgesamt bietet das vorgeschlagene Antriebssystem eine Reihe von Vorteilen gegenüber einem konventionellen Triebwerk oder einen konventionellen Antriebssystemen:
Der in die Brennkammer 3 eingebrachte Dampf erhöht den Massenstrom und damit die Leistung des Turbinenbereichs 24. Für den zusätzlichen Massenstrom muss keine Volumenänderungsarbeit bereitgestellt werden, da der Druckaufbau in der Speisewasserpumpe 18 im flüssigen Zustand erfolgt. Dadurch steigt die spezifische Nutzleistung stark an, und die geforderte Leistung wird mit einem deutlich geringeren Massendurchsatz erzielt. Dadurch können alle Komponenten (Verdichter, Turbinen, Wärmetauscher wie Verdampfer und Kondensator, etc.) kompakt und damit leichter gebaut werden.

Das optimale Gesamtdruckverhältnis liegt unter dem eines konventionellen Triebwerks. Hierdurch kann die Zahl der Verdichter- und Turbinenstufen verringert werden, was sich ebenfalls positiv auf das Gewicht und die Baugröße auswirkt.

Im Vergleich zu dem System, wie es in der US 7 971 438 B2 beschrieben ist, kommen bei der vorliegenden Erfindung nur zwei Wärmetauscher zum Einsatz. Der Verdampfer 5 und der Kondensator 8 sind abgasseitig in die Expansionsstrecke, d.h. zwischen die Turbinen 24, 22 integriert. Der Vorteil dieser Anordnung liegt darin, dass beide Wärmetauscher (Verdampfer 5 und Kondensator 8) bei erhöhtem Druckniveau auf der Heißseite und bei größerer Temperaturdifferenz zwischen den Wärmetauschmedien arbeiten. Dadurch sind die Wärmeübergänge höher und die spezifischen Volumenströme werden, bei vergleichbaren Druckverlusten, kleiner. Zusammen mit dem oben erwähnten geringen Massendurchsatz ergeben sich relativ kleine, kompakte und damit leichte Wärmetauscher 5, 8.

Die gesamte Abgasenergie incl. der Kondensationswärme ist bei der Expansion in den Düsen noch vorhanden und vergrößert dadurch den Austrittsimpuls.

Die Abscheidevorrichtung 9 hat einen relativ kleinen Volumenstrom und damit relativ geringe Abmessungen. Die Wasserabscheidung kann effektiv durchgeführt werden.

Klimawirksame Emissionen können deutlich reduziert werden, denn a) durch die effiziente Nutzung der Abgasenergie und den verringerten Leistungsbedarf bei der Verdichtung des Arbeitsmediums wird der spezifische Kraftstoffverbrauch verringert, und b) durch die Wärmezufuhr in der Brennkammer 3 bei Anwesenheit von Wasser wird die Bildung von Stickoxiden (NOx) stark reduziert.

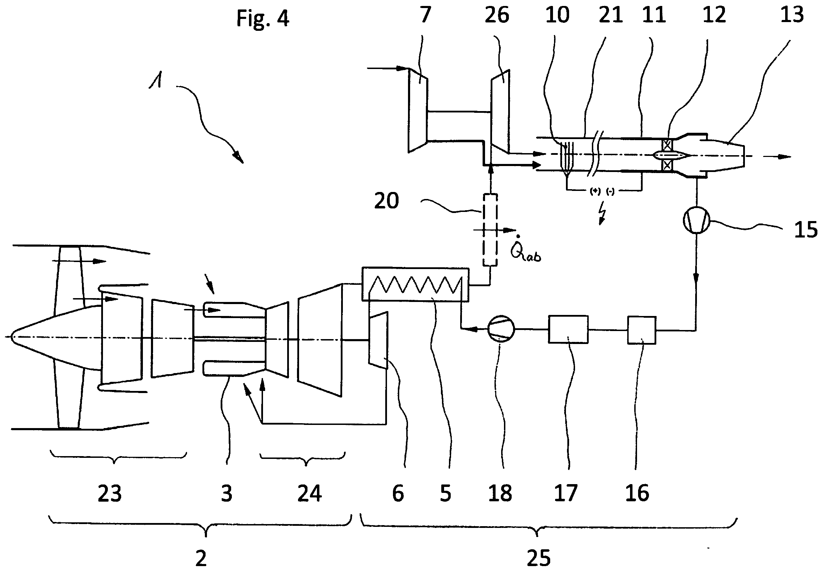

Fig. 4 zeigt ein Flugzeugantriebssystem nach einer vierten Ausführungsform der vorliegenden Erfindung. Jene Komponenten, die gleich oder ähnlich zu den Komponenten der zweiten Ausführungsform sind, haben dieselben Bezugszeichen.

Der Hauptunterschied zu der dritten Ausführungsform liegt darin, dass bei der vierten Ausführungsform kein Kondensator 8 zum Einsatz kommt, und dass die vom Gebläse 7 geförderte kalte Umgebungsluft mit dem bereits heruntergekühlten Abgas in der Mischvorrichtung (Mischkanal) 21 gemischt wird.

Hinter dem Verdampfer 5 wird das Abgas über eine Kühlvorrichtung (Verbindungskanal) 20 zur Hilfsturbine 22 geleitet und dort entspannt. Die Kühlvorrichtung 20 kann in vorteilhafter Weise entfernt von der Wärmekraftmaschine 2 angeordnet sein. Die Kühlvorrichtung 20 zwischen dem Verdampfer 5 und der Hilfsturbine 22 kann vorzugsweise entlang der Oberfläche des Flugzeuges (zum Beispiel am Flügel, am Rumpf, etc.) und weiter bevorzugt ohne Isolierung angeordnet sein, wodurch sich das Abgas schon vor der Expansion in Hilfsturbine 22 abkühlt, indem es Wärme an die Umgebung abgibt. Anschließend wird das Abgas in der Mischvorrichtung 21 geleitet, wo so viel kalte Umgebungsluft vom Gebläse 7 zugemischt wird, bis das enthaltene Wasser kondensiert. Die Wasserabscheidung und Aufbereitung erfolgt wie bei der dritten Ausführungsform der Fig. 3.

Durch die Temperaturabsenkung, durch die Energieabgabe an die Umgebung und die Mischung mit kalter Umgebungsluft kann die Kondensation ohne Wärmetauscher (Kondensator 8) erfolgen. Die von der Kühlvorrichtung 20 an die Umgebung abgegebene Wärme stellt jedoch einen Verlust dar, weil die Enthalpie des Abgases vor der Entspannung in der Kerntriebwerksdüse 13 reduziert wird.

Wie bei der dritten Ausführungsform kann die Leistung der Turbine 6, wie dargestellt, direkt auf eine Welle der Wärmekraftmaschine 2 eingespeist werden oder zum Antrieb von Nebenaggregaten genutzt werden. Damit kann der Wirkungsgrad der Wärmekraftmaschine 2 weiter erhöht werden.

Das im Abgasstrom aus der Wärmekraftmaschine 2 enthaltene Wasser durchläuft bei der vierten Ausführungsform in dieser Reihenfolge den Verdampfer 5, die Kühlvorrichtung 20, die Hilfsturbine 22, die Mischvorrichtung 21, die Kondensatpumpe 15, die Wasseraufbereitungsvorrichtung 16, den Wasserspeicher 17, die Speisewasserpumpe 18, den Verdampfer 5, die Turbine 6 und ggf. die Brennkammer 3 oder die Bauteile im Heißbereich. Das gereinigte Abgas verlässt bereits nach der Mischvorrichtung 21 den Kreislauf, und es wird zum Beispiel aus der Kerntriebwerksdüse 13 ausgelassen.

Die Strömung der Umgebungsluft bei der vierten Ausführungsform durchläuft in dieser Reihenfolge das Gebläse 7, die Mischvorrichtung 21, und es wird dann zumindest teilweise mit dem gereinigten Abgas aus der Kerntriebwerksdüse 13 ausgelassen.

### Bezugszeichenliste

- 1: Flugzeugantriebssystem
- 2: Strömungsmaschine (Wärmekraftmaschine)
- 3: Brennkammer
- 4: Niederdruckturbine
- 5: Verdampfer
- 6: Turbine (Dampfturbine)
- 7: Gebläse
- 8: Kondensator
- 9: Abscheidevorrichtung (Abscheidekanal)
- 10: Sprühelektrode
- 11: Niederschlagelektrode
- 12: Drallerzeuger
- 13: Kerntriebwerksdüse
- 14: Düse
- 15: Kondensatpumpe
- 16: Wasseraufbereitungsvorrichtung
- 17: Wasserspeicher
- 18: Speisewasserpumpe
- 20: Kühlvorrichtung (Verbindungskanal)
- 21: Mischvorrichtung (Mischkanal)
- 22: Hilfsturbine
- 23: Verdichterbereich
- 24: Turbinenbereich
- 25: Abgasbehandlungsvorrichtung, Dampf/Wasser-Rückgewinnungssystem

## Patentansprüche

1. Flugzeugantriebssystem (1) mit einer Strömungsmaschine (2) und einer Abgasbehandlungsvorrichtung zur Behandlung eines Abgasstromes aus der Strömungsmaschine (2) mit einem Kondensator (8), der zumindest einen Teil eines in dem Abgasstrom aus der Strömungsmaschine (2) enthaltenen Wassers kondensiert und dadurch eine erste Energie abgibt;
mit einem Gebläse (7), das dem Kondensator (8) Umgebungsluft zuführt, damit diese die erste Energie aufnimmt; und
zumindest einer Auslassvorrichtung (13, 14), von der die von dem Kondensator (8) abgegebene Umgebungsluft und/oder ein entfeuchteter Abgasstrom von dem Kondensator (8) ausgelassen wird,
**gekennzeichnet durch**
einen Verdampfer (5), der zumindest einen Teil des in dem Kondensator (8) kondensierten Wassers verdampft und dadurch eine zweite Energie aufnimmt, die dem Abgasstrom aus der Strömungsmaschine (2) entnommen wird und
eine Turbine (6), die durch Dampf, der von dem Verdampfer (5) abgegeben wird, angetrieben wird und den Dampf entspannt.

2. Flugzeugantriebssystem (1) mit einer Strömungsmaschine (2) und einer Abgasbehandlungsvorrichtung zur Behandlung eines Abgasstromes aus der Strömungsmaschine (2) mit einem Gebläse (7), das Umgebungsluft abgibt, **gekennzeichnet durch** eine Mischvorrichtung (21), die die von dem Gebläse (7) abgegebene Umgebungsluft mit zumindest einem Teil des Abgasstromes aus der Strömungsmaschine (2) mischt, damit zumindest ein Teil eines in dem Abgasstrom enthaltenen Wassers kondensiert;
einen Verdampfer (5), der zumindest einen Teil des in der Mischvorrichtung (21) kondensierten Wassers verdampft und dadurch Energie aufnimmt, die dem Abgasstrom aus der Strömungsmaschine (2) entnommen wird;
eine Turbine (6), die durch Dampf, der von dem Verdampfer (5) abgegeben wird, angetrieben wird und den Dampf entspannt; und
eine Auslassvorrichtung (13), von der zumindest ein Teil des mit der Umgebungsluft gemischten und entfeuchteten Abgasstroms von der Mischvorrichtung (21) ausgelassen wird.

3. Flugzeugantriebssystem (1) nach Anspruch 2, mit einer Kühlvorrichtung (20) im Abgasstrom stromaufwärts von der Mischvorrichtung (21), die zumindest einen Teil des Abgasstroms aus der Strömungsmaschine (2) kühlt und dadurch Energie abgibt.

4. Flugzeugantriebssystem (1) nach einem der vorhergehenden Ansprüche, wobei das Gebläse (7) durch die Turbine (6) oder durch eine Hilfsturbine (22) angetrieben wird, welche wiederum durch einen Abgasstrom von dem Verdampfer (5) angetrieben wird.

5. Flugzeugantriebssystem (1) nach einem der vorhergehenden Ansprüche, wobei im Abgasstrom stromabwärts vom dem Kondensator (8) oder stromabwärts von der Mischvorrichtung (21) eine Abscheidevorrichtung (9) angeordnet ist, die das von dem Kondensator (8) oder von der Mischvorrichtung (21) abgegebene, kondensierte Wasser abscheidet und dem Verdampfer (5) zuführt.

6. Flugzeugantriebssystem (1) nach dem vorhergehenden Anspruch, wobei die Abscheidevorrichtung (9) eine Sprühelektrode (10), eine Niederschlagelektrode (11) und/oder einen Drallerzeuger (12) aufweist.

7. Flugzeugantriebssystem (1) nach einem der vorhergehenden Ansprüche, wobei der in der Turbine (6) entspannte Dampf in eine Brennkammer (3) der Strömungsmaschine (2) eingebracht wird und/oder zur Kühlung von Bauteilen in einem Heißbereich der Strömungsmaschine (2) verwendet wird.

8. Flugzeugantriebssystem (1) nach einem der vorhergehenden Ansprüche, wobei im Abgasstrom stromabwärts von dem Kondensator (8) oder stromabwärts von der Mischvorrichtung (21) und stromaufwärts von dem Verdampfer (5) eine Kondensatpumpe (15), eine Wasseraufbereitungsvorrichtung (16), ein Wasserspeicher (17) und/oder eine Speisewasserpumpe (18) angeordnet ist.

9. Verfahren zum Behandeln eines Abgasstromes aus einer Strömungsmaschine (2) eines Flugantriebssystems (1) mit folgenden Verfahrensschritten:
Kondensieren zumindest eines Teil eines in dem Abgasstrom aus der Strömungsmaschine (2) enthaltenen Wassers in einem Kondensator (8), wobei eine erste Energie abgegeben wird;
Verdampfen zumindest eines Teil des in dem Kondensator (8) kondensierten Wassers in einem Verdampfer (5), wobei eine zweite Energie aufgenommen wird, die dem Abgasstrom aus der Strömungsmaschine (2) entnommen wird; Antreiben einer Turbine (6) durch Dampf, der von dem Verdampfer (5) abgegeben wird, und Entspannen des Dampfs;
Antreiben eines Gebläses (7), um dem Kondensator (8) Umgebungsluft zuzuführen, damit diese die erste Energie aufnimmt; und
Auslassen der von dem Kondensator (8) abgegebenen Umgebungsluft und/oder eines entfeuchteten Abgasstroms von dem Kondensator (8) aus zumindest einer Auslassvorrichtung (13, 14).

10. Verfahren zum Behandeln eines Abgasstromes aus einer Strömungsmaschine (2) eines Flugantriebssystems (1) mit folgenden Verfahrensschritten:
Abgeben von Umgebungsluft durch ein Gebläse (7);
Mischen der von dem Gebläse (7) abgegebenen Umgebungsluft mit zumindest einem Teil des Abgasstromes aus der Strömungsmaschine (2) durch eine Mischvorrichtung (21), damit zumindest ein Teil eines in dem Abgasstrom enthaltenen Wassers kondensiert;
Verdampfen zumindest eines Teils des in der Mischvorrichtung (21) kondensierten Wassers durch einen Verdampfer (5), der dadurch Energie aufnimmt, die dem Abgasstrom aus der Strömungsmaschine (2) entnommen wird;
Antreiben einer Turbine (6) durch Dampf, der von dem Verdampfer (5) abgegeben wird, und Entspannen des Dampfs; und
Auslassen zumindest eines Teils des mit der Umgebungsluft gemischten und entfeuchteten Abgasstroms von der Mischvorrichtung (21) aus einer Auslassvorrichtung (13).

11. Verfahren nach einem der Ansprüche 9 oder 10, mit folgendem Verfahrensschritt:
Einbringen des in der Turbine (6) entspannten Dampfs in eine Brennkammer (3) der Strömungsmaschine (2) und/oder Verwenden des in der Turbine (6) entspannten Dampfs zur Kühlung von Bauteilen in einem Heißbereich der Strömungsmaschine (2).

12. Verfahren nach einem der Ansprüche 9 bis 11, wobei das Gebläse (7) durch die Turbine (6) oder durch eine Hilfsturbine (22) angetrieben wird, welche wiederum durch den Abgasstrom von dem Verdampfer (5) angetrieben wird.

## Claims

1. Aircraft propulsion system (1) comprising a turbomachine (2) and an exhaust gas treatment device for treating an exhaust gas flow from the turbomachine (2, comprising a condenser (8) which condenses at least a portion of water contained in the exhaust gas flow from the turbomachine (2) and thereby releases a first energy;
comprising
a fan (7), which supplies ambient air to the condenser (8) so that said condenser absorbs the first energy; and
at least one discharge device (13, 14), from which the ambient air is released from the condenser (8) and/or a dehumidified exhaust gas flow is discharged from the condenser (8), **characterized by**
an evaporator (5), which evaporates at least a portion of the water condensed in the condenser (8) and thereby absorbs a second energy which is removed from the exhaust gas flow from the turbomachine (2) and
a turbine (6), which is driven by steam released by the evaporator (5) and expands the steam.

2. Aircraft propulsion system (1) comprising a turbomachine (2) and an exhaust gas treatment device for treating an exhaust gas flow from the turbomachine (2, comprising a fan (7) which delivers ambient air, **characterized by** a mixing device (21), which mixes the ambient air delivered by the fan (7) with at least a portion of the exhaust gas flow from the turbomachine (2) so that at least a portion of water contained in the exhaust gas flow condenses;
an evaporator (5), which evaporates at least a portion of the water condensed in the mixing device (21) and thereby absorbs energy which is removed from the exhaust gas flow from the turbomachine (2);
a turbine (6), which is driven by steam released by the evaporator (5) and expands the steam; and
an outlet device (13), from which at least a portion of the exhaust gas flow mixed with the ambient air and dehumidified is discharged from the mixing device (21).

3. Aircraft propulsion system (1) according to claim 2, comprising a cooling device (20) in the exhaust gas flow upstream of the mixing device (21), which cooling device cools at least a portion of the exhaust gas flow from the turbomachine (2) and thereby releases energy.

4. Aircraft propulsion system (1) according to any of the preceding claims,
wherein
the fan (7) is driven by the turbine (6) or by an auxiliary turbine (22), which in turn is driven by an exhaust gas flow from the evaporator (5).

5. Aircraft propulsion system (1) according to any of the preceding claims,
wherein
a separation device (9) is arranged in the exhaust gas flow downstream of the condenser (8) or downstream of the mixing device (21), which separation device separates the condensed water released by the condenser (8) or from the mixing device (21) and supplies it to the evaporator (5).

6. Aircraft propulsion system (1) according to the preceding claim, wherein
the separation device (9) comprises a spray electrode (10), a precipitation electrode (11) and/or a swirl generator (12).

7. Aircraft propulsion system (1) according to any of the preceding claims,
wherein
the steam expanded in the turbine (6) is introduced into a combustion chamber (3) of the turbomachine (2) and/or is used for cooling components in a hot region of the turbomachine (2).

8. Aircraft propulsion system (1) according to any of the preceding claims,
wherein
a condensate pump (15), a water-treatment device (16), a water reservoir (17) and/or a feed-water pump (18) is arranged in the exhaust gas flow downstream of the condenser (8) or downstream of the mixing device (21) and upstream of the evaporator (5).

9. Method for treating an exhaust gas flow from a turbomachine (2) of an aircraft propulsion system (1, comprising the following method steps:
condensing at least a portion of water contained in the exhaust gas flow from the turbomachine (2) in a condenser (8), wherein a first energy is released;
evaporating at least a portion of the water condensed in the condenser (8) in an evaporator (5), wherein a second energy is absorbed which is removed from the exhaust gas flow from the turbomachine (2);
driving a turbine (6) by steam released by the evaporator (5) and expanding the steam;
driving a fan (7) to supply ambient air to the condenser (8) so that said condenser absorbs the first energy; and
discharging the ambient air released by the condenser (8) and/or a dehumidified exhaust gas flow from the condenser (8) out of at least one discharge device (13, 14).

10. Method for treating an exhaust gas flow from a turbomachine (2) of an aircraft propulsion system (1, comprising the following method steps:
delivering ambient air by means of a fan (7);
mixing the ambient air delivered by the fan (7) with at least a portion of the exhaust gas flow from the turbomachine (2) by means of a mixing device (21) so that at least a portion of water contained in the exhaust gas flow condenses;
evaporating at least a portion of the water condensed in the mixing device (21) by means of an evaporator (5) which thereby absorbs energy which is removed from the exhaust gas flow from the turbomachine (2);
driving a turbine (6) by means of steam which is released by the evaporator (5) and expanding the steam; and
discharging at least a portion of the exhaust gas flow mixed with the ambient air and dehumidified from the mixing device (21) out of a discharge device (13).

11. Method according to either claim 9 or 10, comprising the following method step:
introducing the steam expanded in the turbine (6) into a combustion chamber (3) of the turbomachine (2) and/or using the steam expanded in the turbine (6) for cooling components in a hot region of the turbomachine (2).

12. Method according to any of claims 9 to 11, wherein the fan (7) is driven by the turbine (6) or by an auxiliary turbine (22), which in turn is driven by the exhaust gas flow from the evaporator (5).

## Revendications

1. Système d'entraînement d'aéronef (1) comportant une turbomachine (2) et un dispositif de traitement de gaz d'échappement permettant de traiter un flux de gaz d'échappement provenant de la turbomachine (2 et comportant un condenseur (8) qui condense au moins une partie d'une eau contenue dans le flux de gaz d'échappement provenant de la turbomachine (2) et émet ainsi une première énergie ;
comportant un
ventilateur (7) qui achemine de l'air ambiant au condenseur (8) afin que ledit air ambiant absorbe la première énergie ; et
au moins un dispositif d'évacuation (13, 14) par lequel l'air ambiant émis par le condenseur (8) et/ou un flux de gaz d'échappement déshumidifié sont évacués du condenseur (8), **caractérisé par**
un évaporateur (5) qui fait évaporer au moins une partie de l'eau condensée dans le condenseur (8) et absorbe ainsi une seconde énergie qui est prélevée du flux de gaz d'échappement provenant de la turbomachine (2) et
une turbine (6) qui est entraînée par de la vapeur émise par l'évaporateur (5) et qui détend la vapeur.

2. Système d'entraînement d'aéronef (1) comportant une turbomachine (2) et un dispositif de traitement de gaz d'échappement permettant de traiter un flux de gaz d'échappement provenant de la turbomachine (2 et comportant un ventilateur (7) qui émet de l'air ambiant, **caractérisé par** un dispositif de mélange (21) qui mélange l'air ambiant émis par le ventilateur (7) avec au moins une partie du flux de gaz d'échappement provenant de la turbomachine (2) afin de condenser au moins une partie d'une eau contenue dans le flux de gaz d'échappement ;
un évaporateur (5) qui fait évaporer au moins une partie de l'eau condensée dans le dispositif de mélange (21) et absorbe ainsi de l'énergie qui est prélevée du flux de gaz d'échappement provenant de la turbomachine (2) ;
une turbine (6) qui est entraînée par de la vapeur émise par l'évaporateur (5) et qui détend la vapeur ; et
un dispositif d'évacuation (13) à partir duquel au moins une partie du flux de gaz d'échappement mélangé à l'air ambiant et déshumidifié est évacuée du dispositif de mélange (21).

3. Système d'entraînement d'aéronef (1) selon la revendication 2, comportant un dispositif de refroidissement (20) dans le flux de gaz d'échappement en amont du dispositif de mélange (21), lequel dispositif de refroidissement refroidit au moins une partie du flux de gaz d'échappement provenant de la turbomachine (2) et émet ainsi de l'énergie.

4. Système d'entraînement d'aéronef (1) selon l'une des revendications précédentes,
dans lequel
le ventilateur (7) est entraîné par la turbine (6) ou par une turbine auxiliaire (22), laquelle est à son tour entraînée par un flux de gaz d'échappement provenant de l'évaporateur (5).

5. Système d'entraînement d'aéronef (1) selon l'une des revendications précédentes,
dans lequel,
dans le flux de gaz d'échappement, en aval du condenseur (8) ou en aval du dispositif de mélange (21), un dispositif de séparation (9) est disposé, lequel dispositif de séparation sépare l'eau condensée émise par le condenseur (8) ou par le dispositif de mélange (21) et l'achemine vers l'évaporateur (5).

6. Système d'entraînement d'aéronef (1) selon la revendication précédente, dans lequel
le dispositif de séparation (9) présente une électrode à couronne (10), une électrode de précipitation (11) et/ou un générateur de tourbillons (12).

7. Système d'entraînement d'aéronef (1) selon l'une des revendications précédentes,
dans lequel
la vapeur détendue dans la turbine (6) est introduite dans une chambre de combustion (3) de la turbomachine (2) et/ou est utilisée pour le refroidissement de composants dans une zone chaude de la turbomachine (2).

8. Système d'entraînement d'aéronef (1) selon l'une des revendications précédentes,
dans lequel
une pompe à condensat (15), un dispositif de traitement d'eau (16), un réservoir d'eau (17) et/ou une pompe à eau d'alimentation (18) sont disposés dans le flux de gaz d'échappement, en aval du condenseur (8) ou en aval du dispositif de mélange (21) et en amont de l'évaporateur (5).

9. Procédé permettant le traitement d'un flux de gaz d'échappement provenant d'une turbomachine (2) d'un système d'entraînement d'aéronef (1, comportant les étapes de procédé suivantes :
condensation d'au moins une partie d'une eau contenue dans le flux de gaz d'échappement provenant de la turbomachine (2) dans un condenseur (8), dans lequel une première énergie est émise ;
évaporation d'au moins une partie de l'eau condensée dans le condenseur (8) dans un évaporateur (5), dans lequel une seconde énergie est absorbée, laquelle est prélevée du flux de gaz d'échappement provenant de la turbomachine (2) ;
entraînement d'une turbine (6) par de la vapeur émise par l'évaporateur (5), et détente de la vapeur ;
entraînement d'un ventilateur (7) pour acheminer de l'air ambiant au condenseur (8) afin que ledit air ambiant absorbe la première énergie ; et
évacuation de l'air ambiant émis par le condenseur (8) et/ou d'un flux de gaz d'échappement déshumidifié du condenseur (8) à partir d'au moins un dispositif d'évacuation (13, 14).

10. Procédé permettant le traitement d'un flux de gaz d'échappement provenant d'une turbomachine (2) d'un système d'entraînement d'aéronef (1, comportant les étapes de procédé suivantes :
émission d'air ambiant par un ventilateur (7) ;
mélange de l'air ambiant émis par le ventilateur (7) avec au moins une partie du flux de gaz d'échappement provenant de la turbomachine (2) par un dispositif de mélange (21) afin de condenser au moins une partie d'une eau contenue dans le flux de gaz d'échappement ;
évaporation d'au moins une partie de l'eau condensée dans le dispositif de mélange (21) par un évaporateur (5) qui absorbe ainsi de l'énergie qui est prélevée du flux de gaz d'échappement provenant de la turbomachine (2) ;
entraînement d'une turbine (6) par de la vapeur émise par l'évaporateur (5), et détente de la vapeur ; et
évacuation d'au moins une partie du flux de gaz d'échappement mélangé à l'air ambiant et déshumidifié du dispositif de mélange (21) à partir d'un dispositif d'évacuation (13).

11. Procédé selon l'une des revendications 9 ou 10, comportant l'étape de procédé suivante :
introduction de la vapeur détendue dans la turbine (6) dans une chambre de combustion (3) de la turbomachine (2) et/ou utilisation de la vapeur détendue dans la turbine (6) pour le refroidissement de composants dans une zone chaude de la turbomachine (2).

12. Procédé selon l'une des revendications 9 à 11, dans lequel le ventilateur (7) est entraîné par la turbine (6) ou par une turbine auxiliaire (22), laquelle est à son tour entraînée par le flux de gaz d'échappement provenant de l'évaporateur (5).
